(19)

**Europäisches Patentamt**

**European Patent Office**

**Office européen des brevets**

(11) **EP 4 439 952 A1**

(12) **EUROPEAN PATENT APPLICATION**

(43) Date of publication:
**02.10.2024 Bulletin 2024/40**

(21) Application number: **24166657.7**

(22) Date of filing: **27.03.2024**

(51) International Patent Classification (IPC):
*H02M 1/32* (2007.01)  *H02J 3/38* (2006.01)

(52) Cooperative Patent Classification (CPC):
**H02M 1/32; H02J 3/381; H02J 3/388;** Y02E 10/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 CN 202310357243**

(71) Applicant: **Huawei Digital Power Technologies
Co., Ltd.
Shenzhen, Guangdong 518043 (CN)**

(72) Inventors:
• **XIN, Kai
Shenzhen, 518043 (CN)**
• **RONG, Xianliang
Shenzhen, 518043 (CN)**

(74) Representative: **Epping - Hermann - Fischer
Patentanwaltsgesellschaft mbH
Schloßschmidstraße 5
80639 München (DE)**

(54) **METHOD FOR SUPPRESSING MAGNETIC SATURATION OF TRANSFORMER AND POWER CONVERSION APPARATUS**

(57) This application provides a method for suppressing magnetic saturation of a transformer and a power conversion apparatus. The power conversion apparatus includes a power conversion circuit and a controller. The power conversion circuit is configured to convert a direct current into an alternating current. The controller is configured to: obtain a voltage and a frequency of an output port of the power conversion circuit, and control, based on a ratio N of the voltage to the frequency, the power conversion apparatus to enter a P&Q operating mode or a V/F operating mode. In embodiments of this application, whether magnetic saturation occurs to the transformer is determined based on the ratio N of the voltage to the frequency, to control the transformer to enter the P&Q operating mode or the V/F operating mode. In this way, the transformer can operate in a normal operating condition, and is relieved from a magnetic saturation operating condition. This can avoid a phenomenon of a big current caused by magnetic saturation.

FIG. 3

EP 4 439 952 A1

## Description

## TECHNICAL FIELD

Embodiments of this application relate to the field of power technologies, and more specifically, to a method for suppressing magnetic saturation of a transformer and a power conversion apparatus.

## BACKGROUND

A new energy power generation system may generate a direct current by using solar energy, an energy storage system, and the like, convert the direct current into an alternating current by using a power conversion apparatus (for example, an inverter), and then output the alternating current to a power grid for use by the power grid. For the power conversion apparatus, an alternating current grid connection end may be connected to a power consuming load, and may also be connected to a transformer having a voltage boosting function. If a high-voltage side of the transformer is disconnected from the power grid, islanding occurs between the power conversion apparatus, the power consuming load, and a low-voltage side of the transformer. Islanding is apt to bring a safety risk to a power maintenance person and a power consuming device. Therefore, the power conversion apparatus is provided with an anti-islanding function. In an islanding state, a problem of an overcurrent on an alternating current side of the power conversion apparatus is a main factor that affects safe operation of the power conversion apparatus. When the transformer is magnetically saturated, an output current of the power conversion apparatus is likely to be an overcurrent. Therefore, how to suppress magnetic saturation of the transformer in the islanding state becomes one of technical problems that need to be urgently resolved.

## SUMMARY

This application provides a method for suppressing magnetic saturation of a transformer and a power conversion apparatus. The power conversion apparatus may obtain a voltage and a frequency of an output port of the power conversion apparatus, and determine, based on a ratio N of the voltage to the frequency, whether magnetic saturation occurs to the transformer, to control the power conversion apparatus to enter a P&Q operating mode or a V/F operating mode. In this way, the transformer can operate in a normal operating condition, and is relieved from a magnetic saturation operating condition. This can avoid a phenomenon of a big current caused by magnetic saturation. According to a first aspect, a power conversion apparatus is provided. The power conversion apparatus includes a controller and a power conversion circuit. The power conversion circuit is configured to convert a direct current into an alternating current. An input port of the power conversion circuit is configured to connect to a direct current source. An output port of the power conversion circuit is connected to a power grid through a transformer. The controller is configured to: obtain a voltage and a frequency of the output port of the power conversion circuit, and control, based on a ratio N of the voltage to the frequency, the power conversion apparatus to switch to a P&Q operating mode or a V/F operating mode. The P&Q operating mode is a constant power operating mode, and is used to control active power and reactive power of the output port of the power conversion apparatus. The V/F operating mode is a constant voltage and constant frequency operating mode, and is used to control the voltage and the frequency of the output port of the power conversion apparatus.

In embodiments of this application, by obtaining the voltage and the frequency of the output port of the power conversion apparatus, the controller may obtain the ratio N of the voltage to the frequency through calculation, and control an operating mode of the power conversion apparatus based on N. In this way, the transformer operates in a normal operating condition, and is relieved from a magnetic saturation operating condition. This can effectively avoid impact, on the power conversion apparatus, of a big current caused by magnetic saturation of the transformer.

With reference to the first aspect, in a first possible implementation of the first aspect, the controller is specifically configured to: in response to meeting a trigger condition, control the power conversion apparatus to switch to the V/F operating mode, to adjust the ratio N of the voltage to the frequency to be less than or equal to a first threshold. The trigger condition includes that the ratio N of the voltage to the frequency is greater than a second threshold. The second threshold is greater than or equal to the first threshold.

With reference to the first possible implementation of the first aspect, in a second possible implementation of the first aspect, when the ratio N of the voltage to the frequency is less than or equal to the first threshold, a value of the frequency is L. The controller is further configured to: adjust the value of the frequency to Q at a first time point, where Q is greater than L, and Q is greater than a rated frequency of the power grid; detect the frequency at a second time point, where a value of the frequency corresponding to the second time point is M; and in response to a case in which a difference between M and L is greater than a third threshold, stop sending a PWM driver gating signal within a short period of time or perform power-off; or in response to a case in which a difference between M and L is less than or equal to a third threshold, control the power conversion apparatus to switch to the P&Q operating mode.

In embodiments of this application, after the ratio N of the voltage to the frequency is adjusted to be less than or equal to the first threshold, the frequency may be increased to determine whether the power grid is powered off. After it is determined that a reason why the ratio N of the voltage to the frequency is greater than the second threshold is power-off of the power grid, sending of a PWM driver gating signal stops within a short period of time or power-off is performed. This can eliminate a case in which the ratio N of the voltage to the frequency is mistakenly determined to be greater than the second threshold because the power grid is disturbed.

With reference to the second possible implementation of the first aspect, in a third implementation of the first aspect, the controller is specifically configured to: in response to the case in which the difference between M and L is greater than the third threshold, stop sending the PWM driver gating signal within the short period of time. The controller is further configured to perform power-off in response to detecting that the voltage is 0 when sending of the PWM driver gating signal stops within the short period of time.

In embodiments of this application, after power-off of the power grid is determined via the increase of the frequency sending of the PWM driver gating signal stops within the short period of time. When sending of the PWM driver gating signal stops within the short period of time, whether the power grid is powered off is further determined by detecting whether the voltage is 0. In this way, whether the power grid is powered off can be more accurately determined.

With reference to the first implementation to the third implementation of the first aspect, in a fourth implementation of the first aspect, when the ratio N of the voltage to the frequency is greater than the second threshold, a value of the frequency is O. The controller is further configured to perform low-pass filtering processing on the frequency. A value of a frequency obtained through low-pass filtering processing is P. The trigger condition further includes that an absolute value of a difference between O and P is greater than the third threshold.

In embodiments of this application, to prevent the power conversion apparatus from stopping sending a PWM driver gating signal or performing power-off in a high voltage ride-through state, whether the absolute value of difference between O and P is greater than the third threshold is introduced into the trigger condition to determine whether the power conversion apparatus is in the high voltage ride-through state. In this way, a conflict between high voltage ride-through and stopping of PWM driver gating signal sending or power-off can be avoided.

With reference to the first implementation to the fourth implementation of the first aspect, in a fifth implementation of the first aspect, the trigger condition further includes that duration of the trigger condition is greater than or equal to a fourth threshold.

With reference to the first implementation to the fifth implementation of the first aspect, in a sixth implementation of the first aspect, the power conversion apparatus is a three-phase inverter. The controller is specifically configured to: obtain three line-to-line voltages of an output port of the three-phase inverter, and perform phase-locked loop processing on the three line-to-line voltages to obtain the voltage and the frequency.

With reference to the first implementation to the sixth implementation of the first aspect, in a seventh implementation of the first aspect, the power conversion apparatus further includes at least one circuit having a maximum power point tracking capability. The at least one circuit having the maximum power point tracking capability is configured to connect to a plurality of photovoltaic modules, and is configured to adjust output voltages of the plurality of photovoltaic modules, to track maximum power operating points of the plurality of photovoltaic modules during normal operation. An output end of the at least one circuit having the maximum power point tracking capability is connected to the input end of the power conversion circuit.

According to a second aspect, a method for suppressing magnetic saturation of a transformer is provided. The method is applied to a power conversion apparatus. The method includes: obtaining a voltage and a frequency of an output port of the power conversion apparatus; and controlling, based on a ratio N of the voltage to the frequency, the power conversion apparatus to switch to a P&Q operating mode or a V/F operating mode. The P&Q operating mode is a constant power operating mode, and is used to control active power and reactive power of the output port of the power conversion apparatus. The V/F operating mode is a constant voltage and constant frequency operating mode, and is used to control the voltage and the frequency of the output port of the power conversion apparatus.

In embodiments of this application, by obtaining the voltage and the frequency of the output port of the power conversion apparatus, the power conversion apparatus may obtain the ratio N of the voltage to the frequency through calculation, and control an operating mode of the power conversion apparatus based on N. In this way, the transformer operates in a normal operating condition, and is relieved from a magnetic saturation operating condition. This can effectively avoid impact, on the power conversion apparatus, of a big current caused by magnetic saturation of the transformer.

With reference to the second aspect, in a first possible implementation of the second aspect, the controlling, based on a ratio N of the voltage to the frequency, the power conversion apparatus to enter a P&Q operating mode or a V/F operating mode includes: in response to meeting a trigger condition, controlling the power conversion apparatus to switch to the V/F operating mode, to adjust the ratio N of the voltage to the frequency to be less than or equal to a first threshold. The trigger condition includes that the ratio N of the voltage to the frequency is greater than a second threshold. The second threshold is greater than or equal to the first threshold.

With reference to the first implementation of the second aspect, in a second implementation of the second aspect, when the ratio N of the voltage to the frequency is less than or equal to the first threshold, a value of the frequency is L. The method further includes: adjusting the value of the frequency to Q at a first time point, where Q is greater than L, and Q is greater than a rated frequency of a power grid; detecting the frequency at a second time point, where a value of the frequency corresponding to the second time point is M; and in response to a case in which a difference between M and L is greater than a third threshold, stopping sending a PWM driver gating signal within a short period of time or performing power-off; or in response to a case in which a difference between M and L is less than or equal to a third threshold, control the power conversion apparatus to switch to the P&Q operating mode.

In embodiments of this application, after the ratio N of the voltage to the frequency is adjusted to be less than or equal to the first threshold, the frequency may be increased to determine whether the power grid is powered off. After it is determined that a reason why the ratio N of the voltage to the frequency is greater than the second threshold is power-off of the power grid, sending of a PWM driver gating signal stops within a short period of time or power-off is performed. This can eliminate a case in which the ratio N of the voltage to the frequency is mistakenly determined to be greater than the second threshold because the power grid is disturbed.

With reference to the second implementation of the second aspect, in a third implementation of the second aspect, the stopping sending a PWM driver gating signal within a short period of time or performing power-off, in response to a case in which a difference between M and L is greater than a third threshold includes: in response to the case in which the difference between M and L is greater than the third threshold, stopping sending the PWM driver gating signal within the short period of time. The method further includes: performing power-off in response to detecting that the voltage changes to 0 when sending of the PWM driver gating signal stops within the short period of time.

In embodiments of this application, after power-off of the power grid is determined via the increase of the frequency, sending of the PWM driver gating signal stops within the short period of time. When sending of the PWM driver gating signal stops within the short period of time, whether the power grid is powered off is further determined by detecting whether the voltage is 0. In this way, whether the power grid is powered off can be more accurately determined.

With reference to the first implementation to the third implementation of the second aspect, in a fourth implementation of the second aspect, when the ratio N of the voltage to the frequency is greater than the second threshold, a value of the frequency is O. The method further includes: performing low-pass filtering processing on the frequency. A value of a frequency obtained through low-pass filtering processing is P. The trigger condition further includes that an absolute value of a difference between O and P is greater than the third threshold.

In embodiments of this application, to prevent the power conversion apparatus from stopping sending a PWM driver gating signal or performing power-off in a high voltage ride-through state, whether the absolute value of difference between O and P is greater than the third threshold is introduced into the trigger condition to determine whether the power conversion apparatus is in the high voltage ride-through state. In this way, a conflict between high voltage ride-through and stopping of PWM driver gating signal sending or power-off can be avoided.

With reference to the first implementation to the fourth implementation of the second aspect, in a fifth implementation of the second aspect, the trigger condition further includes that duration of the trigger condition is greater than or equal to a fourth threshold.

According to a third aspect, a power system is provided. The power system includes a direct current source, a power grid, and the power conversion apparatus according to any one of the first aspect and the implementations of the first aspect. The direct current source is connected to an input port of the power conversion apparatus. The input port of the power conversion apparatus is connected to the power grid. The direct current source is configured to generate a direct current. The power conversion apparatus is configured to: convert the direct current into an alternating current, and input the obtained alternating current to the power grid.

## BRIEF DESCRIPTION OF DRAWINGS

FIG. 1 is a schematic block diagram of a power conversion apparatus according to an embodiment of this application;
FIG. 2 is a schematic diagram of a power system according to an embodiment of this application;
FIG. 3 is a schematic diagram of another power system according to an embodiment of this application;
FIG. 4 is a schematic diagram of a voltage change corresponding to a case in which islanding occurs to a power conversion apparatus; and
FIG. 5 is a schematic flowchart of a method for suppressing magnetic saturation of a transformer according to an embodiment of this application.

## DESCRIPTION OF EMBODIMENTS

The following describes the technical solutions in embodiments of this application with reference to the accompanying drawings.

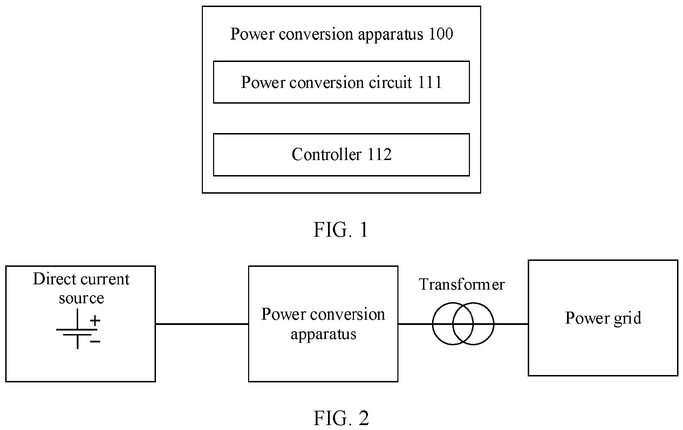

FIG. 1 is a schematic block diagram of a power conversion apparatus according to an embodiment of this application. The power conversion apparatus 100 shown in FIG. 1 includes a power conversion circuit 111 and a controller 112. An input port of the power conversion circuit 111 is configured to connect to a direct current source. An output port of the power conversion circuit 111 is connected to a power grid through a transformer. The power conversion circuit 111 is configured to convert a direct current into an alternating current.

For example, the power conversion apparatus may be an inverter or a power conversion system (power conversion system, PCS).

Optionally, in some embodiments, a power consuming load may be further connected between the output port of the power conversion apparatus 100 and the power grid. The power conversion apparatus 100 may convert the direct current into the alternating current by using the power conversion circuit 111, and transmit, to the power consuming load, an alternating current obtained through processing performed by the transformer, so that the power consuming load can operate normally.

FIG. 2 is a schematic diagram of a power system according to an embodiment of this application. As shown in FIG. 2, the power system includes a direct current source, a power conversion apparatus, a transformer, and a power grid. One end of the power conversion apparatus is connected to the direct current source, and the other end is connected to the power grid through the transformer. When both the power grid and the power conversion apparatus run normally, the power conversion apparatus may convert, into an alternating current, a direct current input by the direct current source, and transmit the alternating current to the power grid. The direct current source may be a photovoltaic array, a wind-generated direct current source, an energy storage system, or the like. In the power system shown in FIG. 2, the power conversion apparatus may be an inverter. If the direct current source is a photovoltaic array, the inverter is correspondingly a photovoltaic inverter. To rectify a direct current generated by a photovoltaic module, a rectifier may be further disposed in the power system. The rectifier is connected between an output port of the photovoltaic module and an input port of the photovoltaic inverter. The rectifier is configured to: rectify the direct current generated by the photovoltaic module, and input a direct current obtained after rectification into the photovoltaic inverter.

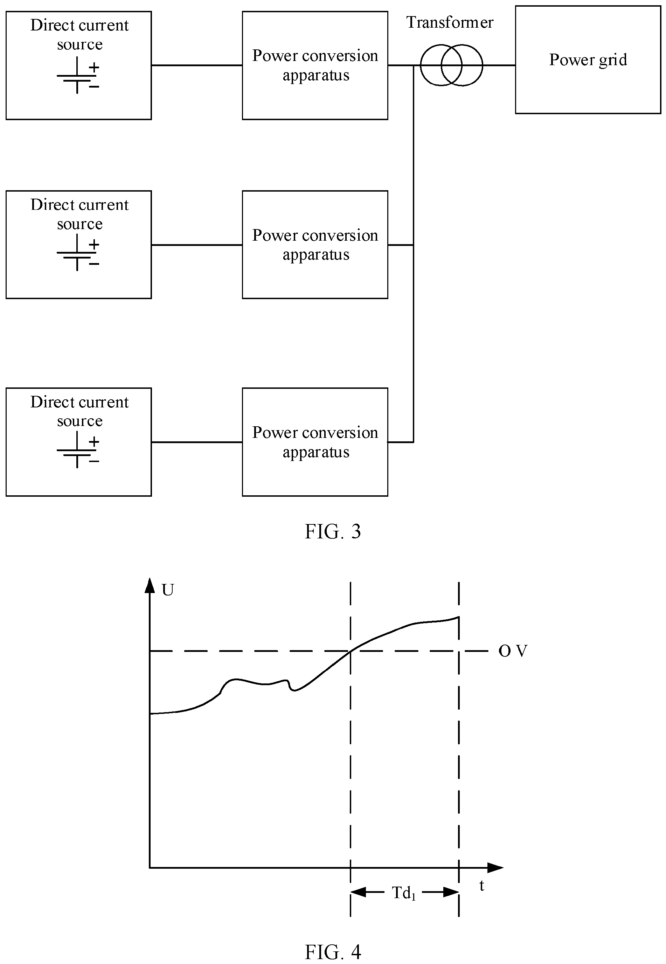

FIG. 3 is a schematic diagram of another power system according to an embodiment of this application. As shown in FIG. 3, the power system includes a plurality of direct current sources and a plurality of power conversion apparatuses. The plurality of power conversion apparatuses are connected in parallel and then are connected to a power grid through a transformer. When the power grid and the plurality of power conversion apparatuses run normally, direct currents input by the plurality of direct current sources are converted into alternating currents by using power conversion apparatuses corresponding to the plurality of direct current sources, and the alternating currents are transmitted to the power grid. In the power system shown in FIG. 3, the plurality of direct current sources may be direct current sources of a same type, or may be direct current sources of different types. A type of each direct current source matches a type of a power conversion apparatus corresponding to the direct current source.

Currently, when determining that islanding occurs, the power conversion apparatus may stop sending a PWM driver gating signal or perform power-off, to indirectly prevent the transformer from being in a magnetic saturation running state for a long time. Specifically, as shown in FIG. 4, the power conversion apparatus may detect a voltage of an output port to determine whether islanding occurs. After the voltage of the output port of the power conversion apparatus exceeds a threshold O V and duration reaches Tdi, the power conversion apparatus may perform overvoltage protection such as stopping of PWM driver gating signal sending or power-off.

However, the foregoing solution is defected by the following disadvantages: (1) If the transformer generates a big current due to magnetic saturation within Tdi, the power conversion apparatus does not perform any protection measure, and consequently the power conversion apparatus may be damaged. (2) A PWM driver gating signal sending stopping or power-off function of the power conversion apparatus conflicts with a high voltage ride-through function. If the power conversion apparatus is in a high voltage ride-through state, the power conversion apparatus cannot stop sending a PWM driver gating signal or perform power-off, and the transformer may be in a magnetic saturation state for a long time, and then may generate the big current to cause damage to the power conversion apparatus. (3) If a ratio of the voltage to a frequency of the output port of the power conversion apparatus is excessively large, the transformer may also be in the magnetic saturation state. As a result, if only the voltage of the output port of the power conversion apparatus is detected, a corresponding operating condition obtained when magnetic saturation occurs to the transformer cannot be fully covered.

On the basis of this, embodiments of this application provide a power conversion apparatus and a method for suppressing magnetic saturation of a transformer, so that whether the transformer is in a magnetic saturation operating condition can be accurately and quickly determined, and a voltage and/or a frequency of an output port can be adjusted to enable the transformer to be relieved from the magnetic saturation operating condition.

Before embodiments of this application are described, several concepts that may be used in embodiments of this application are first described.

A P&Q operating mode is also referred to as a constant power operating mode. In this operating mode, the controller 112 may control active power and reactive power, that are output by the power conversion apparatus 100, to be equal to reference power of the power conversion apparatus 100.

A V/F operating mode is also referred to as a constant voltage and constant frequency operating mode. In this operating mode, adjustment target values of the voltage and the frequency of the output port may be set, the voltage is controlled, based on the adjustment target value of the voltage, to make a value of the voltage equal to the adjustment target value of the voltage, the frequency is controlled, based on the adjustment target value of the frequency, to make a value of the frequency equal to the adjustment target value of the frequency, and output active power and reactive power are determined by a load. The V/F operating mode is commonly used in an islanding mode. In other words, in this operating mode, for different operating conditions, the power conversion apparatus 100 may control the values of the voltage and the frequency of the output port of the power conversion apparatus 100 to be respectively equal to the adjustment target value of the voltage and the adjustment target value of the frequency. The adjustment target value of the voltage and the adjustment target value of the frequency may be changed.

It can be learned from FIG. 1 that the power conversion apparatus 100 embodiments of this application includes the power conversion circuit 111 and the controller 112. The controller 112 is configured to obtain the voltage and the frequency of the output port of the power conversion apparatus 100. The controller 112 is further configured to control, based on a ratio N of the voltage to the frequency of the output port, the power conversion apparatus 100 to enter the P&Q operating mode or the V/F operating mode.

In embodiments of this application, by obtaining the voltage and the frequency of the output port of the power conversion apparatus 100, the controller 112 may obtain the ratio N of the voltage to the frequency through calculation, and control an operating mode of the power conversion apparatus based on N. In this way, the transformer operates in a normal operating condition, and is relieved from a magnetic saturation operating condition. This can effectively avoid impact, on the power conversion apparatus, of a big current caused by magnetic saturation of the transformer. Optionally, in some embodiments, when determining that a trigger condition is met, the controller 112 controls the power conversion apparatus 100 to switch to the V/F operating mode. In the V/F operating mode, the controller 112 may adjust the voltage and/or the frequency, so that the ratio of the voltage to the frequency is less than or equal to a first threshold. The trigger condition includes that the ratio of the voltage to the frequency is greater than a second threshold. The second threshold may be equal to the first threshold, or may be greater than the first threshold.

It should be understood that the first threshold may be a preset value. For example, the first threshold is 1.1 per unit (per unit, pu). A reference value corresponding to the first threshold is a ratio of a peak value of a rated phase voltage of the power grid to a rated frequency of the power grid. In other words, the ratio of the peak value of the rated phase voltage of the power grid to the rated frequency of the power grid is 1 pu. Similarly, the second threshold may be a preset value. For example, the second threshold may be 1.2 pu. A reference value corresponding to the second threshold is a ratio of the peak value of the rated phase voltage of the power grid to the rated frequency of the power grid.

Specifically, in an embodiment of this application, the controller 112 determines, based on whether the ratio N of the voltage to the frequency of the output port of the power conversion apparatus 100 is greater than the second threshold, whether the transformer is in a magnetic saturation operating condition. When the ratio N of the voltage to the frequency is greater than the second threshold, the controller 112 determines that the transformer is in the magnetic saturation operating condition, and the controller 112 may switch the operating mode of the power conversion apparatus 100 from the P&Q operating mode to the V/F operating mode. In the V/F operating mode, the controller 112 may adjust the voltage and/or the frequency, so that the ratio of the voltage to the frequency is less than or equal to the first threshold. The first threshold corresponds to a non-magnetic saturation operating condition. In this way, the transformer is relieved from the magnetic saturation operating condition.

Optionally, in some embodiments, the power conversion apparatus 100 may be a three-phase inverter. The controller 112 may obtain three line-to-line voltages of an output port of the three-phase inverter. The three line-to-line voltages are respectively $U_{ab}$, $U_{bc}$, and $U_{ca}$. The controller 112 performs phase-locked loop processing on the three line-to-line voltages to obtain a positive-order component (which may also be referred to as a positive-order voltage) and a frequency of the line-to-line voltages. The controller 112 uses, as a voltage and a frequency of the output port, the positive-order voltage and the frequency that are obtained through phase-locked loop processing.

It should be noted that a phase-locked loop method used by the controller 112 is not limited in embodiments of this application, and there may be the following several examples.

For example, the controller 112 performs phase-locked loop processing on the foregoing three line-to-line voltages through a phase-locked loop circuit, to obtain the positive-order component and the frequency of the line-to-line voltages.

For example, the controller 112 performs phase-locked loop processing on the foregoing three line-to-line voltages based on a software phase-locked loop algorithm, to obtain the positive-order component and the frequency of the line-to-line voltages.

It should be further noted that a method for detecting the line-to-line voltage of the output port of the three-phase inverter by the controller 112 is not limited in embodiments of this application, and there may be the following several examples.

For example, the controller 112 performs differential sampling by using a resistor and an operational amplifier, to obtain the line-to-line voltages of the output port.

For example, the controller 112 performs sampling by using a linear opto-isolator, to obtain the line-to-line voltages of the output port.

For example, the controller 112 performs sampling by using a Hall sensor, to obtain the line-to-line voltages of the output port.

Optionally, in some embodiments, the power conversion apparatus 100 may be a three-phase inverter. The controller 112 may obtain three line-to-line voltages of an output port of the three-phase inverter. The three line-to-line voltages are respectively $U_{ab}$, $U_{bc}$, and $U_{ca}$. The controller 112 calculates an average value of the three line-to-line voltages based on the three line-to-line voltages, and determines the average value of the three line-to-line voltages as a voltage of the output port of the three-phase inverter. In this embodiment, the controller 112 may directly obtain a frequency of the output port of the three-phase inverter. For example, the controller 112 may detect the frequency of the output port of the three-phase inverter by using a zero-crossing detection circuit.

Optionally, in some embodiments, the power conversion apparatus 100 may be a single-phase inverter. The controller 112 may obtain a phase voltage of an output port of the single-phase inverter, determine the phase voltage as a voltage of the output port of the single-phase inverter, and perform phase-locked loop processing on the phase voltage to determine the frequency. Alternatively, the controller 112 may directly obtain the frequency of the output port of the single-phase inverter according to a method, for example, a zero-crossing detection circuit.

When determining that the trigger condition is met, the controller 112 switches the power conversion apparatus to the V/F operating mode, and then, may adjust the voltage and/or the frequency, so that the ratio N of the voltage to the frequency is less than or equal to the first threshold. When adjusting the voltage and/or the frequency, the controller 112 may first determine adjustment target values of the voltage and the frequency, and then adjust the voltage to the adjustment target value of the voltage and adjust the frequency to the adjustment target value of the frequency. In the following, the adjustment target value of the voltage is referred to as a first adjustment target value, and the adjustment target value of the frequency is referred to as a second adjustment target value.

When the power conversion apparatus 100 is the three-phase inverter and the voltage is the positive-order component of the line-to-line voltages, the first adjustment target value may be a moving average value of positive-order components of line-to-line voltages of the three-phase inverter within A mains frequency cycles before the trigger condition is met, where A is greater than or equal to 1, and is an integer. Similarly, the second adjustment target value may be a moving average value of frequencies of the three-phase inverter within B mains frequency cycles before the trigger condition is met, where B is greater than or equal to 1, and is an integer. B may be equal to A, or may not be equal to A.

Further, when a ratio of the moving average value of the positive-order components of the line-to-line voltages within the A mains frequency cycles to the moving average value of the frequencies within the B mains frequency cycles is greater than the second threshold, the first adjustment target value and the second adjustment target value may be the preset values. For example, the first adjustment target value may be preset to 1.1 pu. The reference value corresponding to the first adjustment target value is the peak value of the rated phase voltage of the power grid, and the second adjustment target value may be the rated frequency of the power grid.

When the power conversion apparatus 100 is the single-phase inverter, the first adjustment target value may be a moving average value of phase voltages of the single-phase inverter within C mains frequency cycles before the trigger condition is met, where C is greater than or equal to 1, and is an integer. Similarly, the second adjustment target value may be a moving average value of frequencies of the single-phase inverter within D mains frequency cycles before the trigger condition is met, where D is greater than or equal to 1, and is an integer. D may be equal to C, or may not be equal to C.

Further, when a ratio of the moving average value of the phase voltages within the C mains frequency cycles to the moving average value of the frequencies within the D mains frequency cycles is greater than the second threshold, the first adjustment target value and the second adjustment target value may be the preset values. For example, the first adjustment target value may be 1.1 pu. The reference value corresponding to the first adjustment target value is the peak value of the rated phase voltage of the power grid, and the second adjustment target value may be the rated frequency of the power grid.

It should be noted that a method for adjusting the voltage and/or the frequency by the controller 112 is not limited in embodiments of this application. For example, the controller 112 may adjust the voltage and/or the frequency according to a method, for example, a current loop control method or a voltage loop control method.

For example, the controller 112 may adjust the voltage and/or the frequency by using the current loop control method. The controller 112 includes a pulse-width modulation (pulse-width modulation, PWM) circuit (not shown in FIG. 3). After determining the first adjustment target value and the second adjustment target value, the controller 112 may determine a current reference value based on the first adjustment target value and the second adjustment target value, and output a modulated wave to the PWM circuit through current loop control. The PWM circuit may adjust the voltage and/or the frequency based on the modulated wave.

Optionally, in some embodiments, after the controller 112 adjusts the voltage and/or the frequency, so that the ratio N of the voltage to the frequency is less than the first threshold, a value of the frequency is L. The controller 112 may further adjust the value of the frequency to Q at a first time point, where Q is greater than L and Q is greater than the rated frequency of the power grid, and detect the frequency at a second time point, where a value of the frequency corresponding to the second time point is M. When detecting that a difference between M and L is greater than a third threshold, the controller 112 stops sending a PWM driver gating signal within a short period of time or performs power-off, or when detecting that a difference between M and L is less than or equal to a third threshold, the controller 112 controls the power conversion apparatus to switch to the P&Q operating mode.

Specifically, the power grid may be powered off or disturbed and consequently the ratio N of the voltage to the frequency is greater than the second threshold. To further determine a reason why the ratio N of the voltage to the frequency is greater than the second threshold, whether the power grid is actually powered off may be detected. In embodiments of this application, the frequency may be adjusted to Q at the first time point. Q is greater than L. A difference between Q and L is greater than the third threshold. The value of the frequency measured at the second time point is M. When the difference between M and L is greater than the third threshold, the controller 112 may determine that the reason why the ratio N of the voltage to the frequency is greater than the second threshold may be that the power grid is actually powered off, and may stop sending a PWM driver gating signal within a short period of time or perform power-off. When the difference between M and L is less than or equal to the third threshold, the controller 112 may determine that the reason why the ratio N of the voltage to the frequency is greater than the second threshold may be that the power grid is disturbed, and control the power conversion apparatus to switch to the P&Q operating mode. When the power grid is not powered off, even if the controller 112 increases the value of the frequency to Q at the first time point, the controller 112 cannot successfully keep the value of the frequency unchanged at Q because of a clamping effect of the power grid and because Q is greater than the rated frequency of the power grid. In other words, the value of the frequency falls back. Therefore, the controller 112 may detect the frequency at the second time point. The value of the frequency at the second time point is M. If the difference between M and L is less than or equal to the third threshold, it may be considered that the power grid is not powered off. On the contrary, if a difference between M and L is greater than a third threshold, it may be considered that the power grid is actually powered off.

It should be understood that the third threshold may be a preset value. For example, the third threshold is 0.5 Hz.

Further, in some embodiments, when detecting that the difference between M and L is greater than the third threshold, the controller 112 stops sending a PWM driver gating signal within a short period of time. If detecting that the voltage is 0 when sending of the PWM driver gating signal stops within the short period of time, the controller 112 may perform power-off.

When the controller 112 stops sending the PWM driver gating signal within the short period of time, if the power grid is actually powered off and the voltage is 0, the controller 112 may perform power-off.

Optionally, in some embodiments, when the ratio N of the voltage to the frequency is greater than the second threshold, the value of the frequency is O. The controller 112 may further perform low-pass filtering processing on the frequency. A value of a frequency obtained through low-pass filtering processing is P. The trigger condition further includes that an absolute value of a difference between O and P is greater than the third threshold. In other words, in this embodiment, when the ratio N of the voltage to the frequency is greater than the second threshold and the absolute value of the difference between O and P is greater than the third threshold, the controller 112 controls the power conversion apparatus 100 to switch to the V/F operating mode.

It should be noted that, in embodiments of this application, a time constant for performing low-pass filtering processing may not be limited. For example, the time constant may be $\frac{0.1}{2\pi}$ to $\frac{10}{2\pi}$.

It should be further noted that a low-pass filtering method is not limited in embodiments of this application, and there may be the following several examples.

For example, the controller 112 may perform low-pass filtering processing on the frequency through a low-pass filter circuit.

For example, the controller 112 may perform low-pass filtering processing on the frequency based on a software low-pass filtering algorithm.

In embodiments of this application, to prevent the power conversion apparatus from stopping sending a PWM driver gating signal or performing power-off in a high voltage ride-through state, whether the absolute value of difference between O and P is greater than the third threshold is introduced into the trigger condition to determine whether the power conversion apparatus is in the high voltage ride-through state. In this way, a conflict between high voltage ride-through and stopping of PWM driver gating signal sending or power-off can be avoided.

Optionally, in some embodiments, the trigger condition further includes that duration of the trigger condition is greater than or equal to a fourth threshold.

For example, the trigger condition may be that the ratio N of the voltage to the frequency is greater than the second threshold and the duration is greater than or equal to the fourth threshold.

For another example, the trigger condition may be that the ratio N of the voltage to the frequency is greater than the second threshold, an absolute value of a difference between the frequency and the frequency obtained through low-pass filtering processing is greater than the third threshold, and the duration is greater than or equal to the fourth threshold.

It should be understood that the fourth threshold may be a preset value. For example, the fourth threshold is three mains frequency cycles.

Optionally, in some embodiments, the power conversion apparatus 100 further includes at least one circuit having a maximum power point tracking capability. The at least one circuit having the maximum power point tracking capability is used for maximum power point tracking (maximum power point tracking, MPPT). The at least one circuit having the maximum power point tracking capability is configured to: connect to a photovoltaic module, and adjust an output voltage of the photovoltaic module, to track a maximum power operating point of the photovoltaic module during normal operation. An output end of the at least one circuit having the maximum power point tracking capability is connected to the input end of the power conversion circuit 111.

It should be understood that the photovoltaic module is a component that directly converts solar energy into electric energy through a photovoltaic (photovoltaic) effect produced by a semiconductor material in a lighting condition. The photovoltaic module may also be referred to as a photovoltaic array, a solar panel, or the like. This is not limited in embodiments of this application.

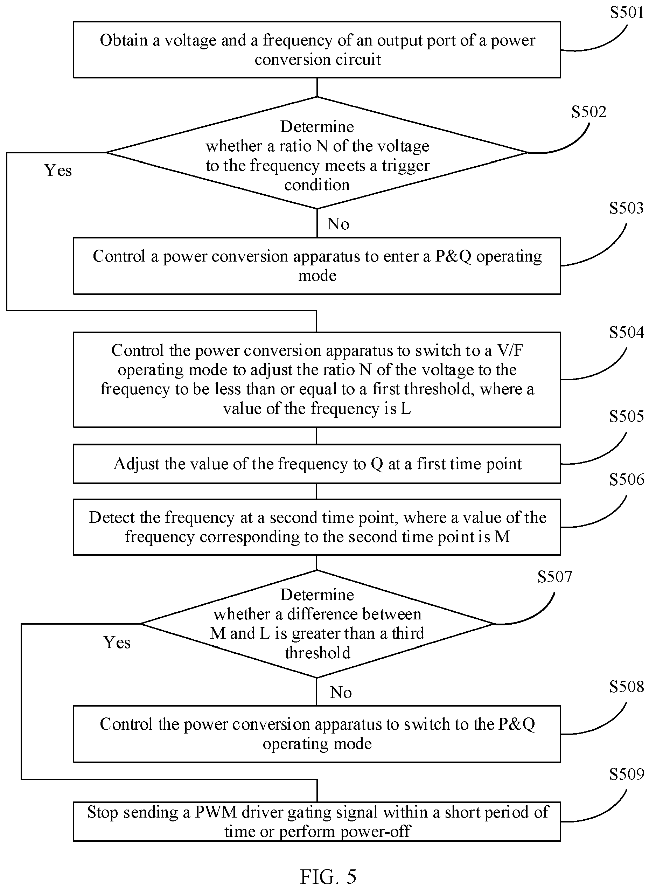

FIG. 5 is a schematic flowchart of a method 500 for suppressing magnetic saturation of a transformer according to an embodiment of this application. The method is applied to a power conversion apparatus. As shown in FIG. 5, the method 500 includes the following steps.

S501: Obtain a voltage and a frequency of an output port of the power conversion apparatus.

S502: Determine whether a ratio N of the voltage to the frequency meets a trigger condition.

Specifically, the power conversion apparatus obtains the voltage and the frequency of the output port of the power conversion apparatus, obtains the ratio N of the voltage to the frequency through calculation based on the obtained voltage and frequency, and determines whether the ratio N of the voltage to the frequency meets the trigger condition. When the trigger condition is not met, S503 is performed. When the trigger condition is met, S504 is performed. Optionally, in some embodiments, the trigger condition includes that the ratio of the voltage to the frequency is greater than a second threshold.

Optionally, in some embodiments, the power conversion apparatus may be a three-phase inverter. The inverter detects three line-to-line voltages of an output port of the inverter, performs phase-locked loop processing on the three line-to-line voltages to obtain a positive-order component and a frequency of the voltages, determines the positive-order component of the voltages as the voltage of the output port, and determines, as the frequency of the output port, a frequency obtained through the phase-locked loop processing.

Optionally, in some embodiments, the power conversion apparatus may be a single-phase inverter. The inverter detects a phase voltage and a frequency of an output port of the inverter, and determines the phase voltage and the frequency as the voltage and the frequency of the output port.

S503: Control the power conversion apparatus to enter a P&Q operating mode.

When determining that the ratio N of the voltage to the frequency is less than or equal to the second threshold, the power conversion apparatus may control the power conversion apparatus to enter the P&Q operating mode. In other words, when determining that the transformer is in a non-magnetic saturation operating condition, the power conversion apparatus may control the power conversion apparatus to enter the P&Q operating mode, to control active power and reactive power. There may be the following several possible implementations in which the power conversion apparatus controls the power conversion apparatus to enter the P&Q operating mode.

In a possible implementation, the power conversion apparatus is in a V/F operating mode before S503 is performed. In this case, when S503 is performed, the power conversion apparatus may switch from the V/F operating mode to the P&Q operating mode.

In a possible implementation, the power conversion apparatus is already in the P&Q operating mode before S503 is performed. In this case, when S503 is performed, the power conversion apparatus may keep the power conversion apparatus in the P&Q operating mode.

S504: Control the power conversion apparatus to switch to the V/F operating mode to adjust the ratio N of the voltage to the frequency to be less than or equal to a first threshold, where a value of the frequency is L.

When determining that the ratio N of the voltage to the frequency is greater than the second threshold, the power conversion apparatus may control the power conversion apparatus to switch from the P&Q operating mode to the V/F operating mode. In the V/F operating mode, the power conversion apparatus may adjust the voltage and/or the frequency, so that the ratio N of the voltage to the frequency is less than or equal to the first threshold.

It should be understood that, for descriptions of the first threshold and the second threshold, refer to the foregoing descriptions. For brevity, details are not described herein again.

When adjusting the voltage and/or the frequency, the power conversion apparatus may first determine adjustment target values of the voltage and the frequency, and then adjust the voltage to a first adjustment target value and adjust the frequency to a second adjustment target value.

Optionally, in some embodiments, when the power conversion apparatus 100 is the three-phase inverter and the voltage is a positive-order component of line-to-line voltages, the first adjustment target value may be a moving average value of positive-order components of line-to-line voltages of the three-phase inverter within A mains frequency cycles before the trigger condition is met, where A is greater than or equal to 1, and is an integer. Similarly, the second adjustment target value may be a moving average value of frequencies of the three-phase inverter within B mains frequency cycles before the trigger condition is met, where B is greater than or equal to 1, and is an integer. B may be equal to A, or may not be equal to A.

Further, when a ratio of the moving average value of the positive-order components of the line-to-line voltages within the A mains frequency cycles to the moving average value of the frequencies within the B mains frequency cycles is greater than the second threshold, the first adjustment target value and the second adjustment target value may be preset values. For example, the first adjustment target value may be preset to 1.1 pu. A reference value corresponding to the first adjustment target value is a peak value of a rated phase voltage of a power grid, and the second adjustment target value may be a rated frequency of the power grid.

Optionally, in some embodiments, when the power conversion apparatus 100 is the single-phase inverter, the first adjustment target value may be a moving average value of phase voltages of the single-phase inverter within C mains frequency cycles before the trigger condition is met, where C is greater than or equal to 1, and is an integer. Similarly, the second adjustment target value may be a moving average value of frequencies of the single-phase inverter within D mains frequency cycles before the trigger condition is met, where D is greater than or equal to 1, and is an integer. D may be equal to C, or may not be equal to C.

Further, when a ratio of the moving average value of the phase voltages within the C mains frequency cycles to the moving average value of the frequencies within the D mains frequency cycles is greater than the second threshold, the first adjustment target value and the second adjustment target value may be preset values. For example, the first adjustment target value may be 1.1 pu. A reference value corresponding to the first adjustment target value is a peak value of a rated phase voltage of a power grid, and the second adjustment target value may be a rated frequency of the power grid.

Optionally, in some embodiments, after S504 is performed, the value of the frequency is L, where L is equal to the rated frequency of the power grid, and the method 500 further includes the following steps.

S505: Adjust the value of the frequency to Q at a first time point, where Q is greater than L.

S506: Detect the frequency at a second time point, where a value of the frequency corresponding to the second time point is M.

S507: Determine whether a difference between M and L is greater than a third threshold.

Specifically, after the power conversion apparatus switches to the V/F operating mode, the ratio N of the voltage to the frequency may be less than or equal to the first threshold. In this case, the value of the frequency is L. To further determine whether the power grid is actually powered off, the power conversion apparatus adjusts the value of the frequency to Q at the first time point, where Q is greater than L and Q is greater than the rated frequency of the power grid; and detects that the value of the frequency at the second time point is M. By determining whether the difference between M and L is greater than the third threshold, the power conversion apparatus determines whether the power grid is powered off. If the difference between M and L is less than or equal to the third threshold, the power grid may not be powered off, and a reason why the ratio N of the voltage to the frequency is greater than the second threshold may be that the power grid is disturbed. In this case, S508 is performed. If the difference between M and L is greater than the third threshold, the power grid may be powered off, and consequently the ratio N of the voltage to the frequency is greater than the second threshold. In this case, S509 is performed.

The third threshold may be a preset value. For example, the third threshold is 0.5 Hz.

S508: Control the power conversion apparatus to switch to the P&Q operating mode.

Specifically, the power conversion apparatus determines that the reason why the ratio N of the voltage to the frequency is greater than the second threshold may be that the power grid is disturbed, and may switch the power conversion apparatus from the V/F operating mode to the P&Q operating mode to control active power and reactive power. S509: Stop sending a PWM driver gating signal within a short period of time or perform power-off.

Specifically, if the power conversion apparatus determines that the reason why the ratio N of the voltage to the frequency is greater than the second threshold may be that the power grid is powered off, the power conversion apparatus may stop sending the PWM driver gating signal within the short period of time or perform power-off to avoid islanding.

Optionally, in some embodiments, the stopping sending a PWM driver gating signal within a short period of time or performing power-off in S509 includes: stopping sending the PWM driver gating signal within the short period of time. The method 500 further includes: performing power-off if detecting that the voltage is 0 when sending of the PWM driver gating signal stops within the short period of time.

Specifically, when determining that the difference between M and L is greater than the third threshold, the power conversion apparatus may first stop sending the PWM driver gating signal within the short period of time, detect the voltage of the output port when sending of the PWM driver gating signal stops within the short period of time, and perform power-off if detecting that the voltage is 0.

Optionally, in some embodiments, the trigger condition further includes that duration within which the ratio of the voltage to the frequency is greater than N is greater than or equal to a fourth threshold, that is, the trigger condition is that the ratio N of the voltage to the frequency is greater than the second threshold and the duration is greater than or equal to the fourth threshold.

Optionally, in some embodiments, when the ratio N of the voltage to the frequency is greater than the second threshold, the value of the frequency is O. The method 500 further includes:

performing low-pass filtering on the frequency.

The power conversion apparatus may perform low-pass filtering processing on the frequency, and a value of a frequency obtained through the low-pass filtering processing is P. In this embodiment, the trigger condition further includes that an absolute value of a difference between O and P is greater than the third threshold. In other words, the trigger condition is that the ratio N of the voltage to the frequency is greater than the second threshold and the absolute value of the difference between O and P is greater than the third threshold.

Optionally, in some embodiments, the trigger condition is that the ratio of the voltage to the frequency is greater than N, the absolute value of the difference between O and P is greater than the third threshold, and the duration is greater than or equal to the fourth threshold.

Based on the foregoing technical solutions, the power conversion apparatus can accurately determine whether the transformer runs in the magnetic saturation operating condition. When determining that the transformer runs in the magnetic saturation operating condition, the power conversion apparatus can switch an operating mode to the V/F operating mode to adjust the voltage and/or frequency. In this way, the transformer is relieved from the magnetic saturation operating condition, and occurrence of magnetic saturation of the transformer is suppressed. In addition, the power conversion apparatus can determine, by increasing the frequency, whether the power grid is actually powered off. When determining that the power grid is powered off, the power conversion apparatus can perform stop sending a PWM driver gating signal within a short period of time or perform power-off, to avoid islanding. Terminologies such as "component", "module", and "system" used in this specification indicates computer-related entities, hardware, firmware, a combination of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, wherein the power conversion apparatus comprises a controller and a power conversion circuit;

   an input port of the power conversion circuit is configured to connect to a direct current source, and an output port of the power conversion circuit is connected to a power grid through a transformer; and
   the controller is configured to: obtain a voltage and a frequency of the output port of the power conversion circuit, and control, based on a ratio N of the voltage to the frequency, the power conversion apparatus to switch to a P&Q operating mode or a V/F operating mode, wherein the P&Q operating mode is a constant power operating mode, and is used to control active power and reactive power of the output port of the power conversion apparatus, and the V/F operating mode is a constant voltage and constant frequency operating mode, and is used to control the voltage and the frequency of the output port of the power conversion apparatus.

2. The power conversion apparatus according to claim 1, wherein the controller is specifically configured to: in response to meeting a trigger condition, control the power conversion apparatus to switch to the V/F operating mode, to adjust the ratio N of the voltage to the frequency to be less than or equal to a first threshold, wherein the trigger condition comprises that the ratio N of the voltage to the frequency is greater than a second threshold, and the second threshold is greater than or equal to the first threshold.

3. The power conversion apparatus according to claim 2, wherein when the ratio N of the voltage to the frequency is less than or equal to the first threshold, a value of the frequency is L, and the controller is further configured to adjust the value of the frequency to Q at a first time point, wherein Q is greater than L, and Q is greater than a rated frequency of the power grid;

   detect the frequency at a second time point, wherein a value of the frequency corresponding to the second time point is M; and
   in response to a case in which a difference between M and L is greater than a third threshold, stop sending a PWM driver gating signal within a short period of time or perform power-off; or
   in response to a case in which a difference between M and L is less than or equal to a third threshold, control the power conversion apparatus to switch to the P&Q operating mode.

4. The power conversion apparatus according to claim 3, wherein the controller is specifically configured to: in response to the case in which the difference between M and L is greater than the third threshold, stop sending the PWM driver gating signal within a short period of time; and
   the controller is further configured to perform power-off in response to detecting that the voltage is 0 when sending of the PWM driver gating signal stops within the short period of time.

5. The power conversion apparatus according to any one of claims 2 to 4, wherein when the ratio N of the voltage to the frequency is greater than the second threshold, a value of the frequency is O, and the controller is further configured to perform low-pass filtering processing on the frequency, wherein a value of a frequency obtained through low-pass filtering processing is P, and the trigger condition further comprises that an absolute value of a difference between O and P is greater than the third threshold.

6. The power conversion apparatus according to any one of claims 2 to 5, wherein the trigger condition further comprises that duration of the trigger condition is greater than or equal to a fourth threshold.

7. The power conversion apparatus according to any one of claims 1 to 6, wherein the power conversion apparatus is a three-phase inverter, and the controller is specifically configured to:

   obtain three line-to-line voltages of an output port of the three-phase inverter; and
   perform phase-locked loop processing on the three line-to-line voltages to obtain the voltage and the frequency.

8. The power conversion apparatus according to any one of claims 1 to 7, wherein the power conversion apparatus further comprises at least one circuit having a maximum power point tracking capability, the at least one circuit having the maximum power point tracking capability is configured to connect to a plurality of photovoltaic modules, and is configured to adjust output voltages of the plurality of photovoltaic modules, to track maximum power operating points of the plurality of photovoltaic modules during normal operation, wherein an output end of the at least one circuit having the maximum power point tracking capability is connected to an input end of the power conversion circuit.

9. A method for suppressing magnetic saturation of a transformer, wherein the method is applied to a power conversion apparatus, and the method comprises:

obtaining a voltage and a frequency of an output port of the power conversion apparatus; and controlling, based on a ratio N of the voltage to the frequency, the power conversion apparatus to switch to a P&Q operating mode or a V/F operating mode, wherein the P&Q operating mode is a constant power operating mode, and is used to control active power and reactive power of the output port of the power conversion apparatus, and the V/F operating mode is a constant voltage and constant frequency operating mode, and is used to control the voltage and the frequency of the output port of the power conversion apparatus.

10. The method according to claim 9, wherein the controlling, based on a ratio N of the voltage to the frequency, the power conversion apparatus to switch to a P&Q operating mode or a V/F operating mode comprises:
in response to meeting a trigger condition, controlling the power conversion apparatus to switch to the V/F operating mode, to adjust the ratio N of the voltage to the frequency to be less than or equal to a first threshold, wherein the trigger condition comprises that the ratio N of the voltage to the frequency is greater than a second threshold, and the second threshold is greater than or equal to the first threshold.

11. The method according to claim 10, wherein when the ratio N of the voltage to the frequency is less than or equal to the first threshold, a value of the frequency is L, and the method further comprises:

adjusting the value of the frequency to Q at a first time point, wherein Q is greater than L, and Q is greater than a rated frequency of a power grid;
detecting the frequency at a second time point, wherein a value of the frequency corresponding to the second time point is M; and
in response to a case in which a difference between M and L is greater than a third threshold, stopping sending a PWM driver gating signal within a short period of time or performing power-off; or
in response to a case in which a difference between M and L is less than or equal to a third threshold, controlling the power conversion apparatus to switch to the P&Q operating mode.

12. The method according to claim 11, wherein the stopping sending a PWM driver gating signal within a short period of time or performing power-off, in response to a case in which a difference between M and L is greater than a third threshold comprises:

in response to the case in which the difference between M and L is greater than the third threshold, stopping sending the PWM driver gating signal within the short period of time; and
the method further comprises:
performing power-off in response to detecting that the voltage changes to 0 when sending of the PWM driver gating signal stops within the short period of time.

13. The method according to any one of claims 9 to 12, wherein when the ratio N of the voltage to the frequency is greater than the second threshold, a value of the frequency is O, and the method further comprises:
performing low-pass filtering processing on the frequency, wherein a value of a frequency obtained through low-pass filtering processing is P, and the trigger condition further comprises that an absolute value of a difference between O and P is greater than the third threshold.

14. The method according to any one of claims 9 to 13, wherein the trigger condition further comprises that duration of the trigger condition is greater than or equal to a fourth threshold.

15. The method according to any one of claims 9 to 14, wherein,

obtaining three line-to-line voltages of an output port of the three-phase inverter; and
performing phase-locked loop processing on the three line-to-line voltages to obtain the voltage and the frequency.

Power conversion apparatus 100

Power conversion circuit 111

Controller 112

FIG. 1

Direct current source

+

−

Power conversion apparatus

Transformer

Power grid

FIG. 2

FIG. 3

FIG. 4

S501

Obtain a voltage and a frequency of an output port of a power conversion circuit

S502

Determine whether a ratio N of the voltage to the frequency meets a trigger condition

Yes

No

S503

Control a power conversion apparatus to enter a P&Q operating mode

S504

Control the power conversion apparatus to switch to a V/F operating mode to adjust the ratio N of the voltage to the frequency to be less than or equal to a first threshold, where a value of the frequency is L

S505

Adjust the value of the frequency to Q at a first time point

S506

Detect the frequency at a second time point, where a value of the frequency corresponding to the second time point is M

S507

Determine whether a difference between M and L is greater than a third threshold

Yes

No

S508

Control the power conversion apparatus to switch to the P&Q operating mode

S509

Stop sending a PWM driver gating signal within a short period of time or perform power-off

FIG. 5

Europäisches
Patentamt

European
Patent Office

Office européen
des brevets

# EUROPEAN SEARCH REPORT

**Application Number**

EP 24 16 6657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHAN FAIZAN ET AL: "Simulation of microgrid system with distributed generation", 2017 IEEE ELECTRICAL POWER AND ENERGY CONFERENCE (EPEC), IEEE, 22 October 2017 (2017-10-22), pages 1-6, XP033317737, DOI: 10.1109/EPEC.2017.8286175 [retrieved on 2018-02-07] * figures 1, 6-10 * * Chapters I-III * | 1-15 | INV. H02M1/32 H02J3/38 |
| A | XIAOYU WANG ET AL: "Impact of islanding detection time on the mode transition of inverter-based micro-grid", ELECTRIC UTILITY DEREGULATION AND RESTRUCTURING AND POWER TECHNOLOGIES (DRPT), 2011 4TH INTERNATIONAL CONFERENCE ON, IEEE, 6 July 2011 (2011-07-06), pages 708-711, XP032039221, DOI: 10.1109/DRPT.2011.5993984 ISBN: 978-1-4577-0364-5 * Chapters I-II; figures 1-5 * | 1-15 | |
| A | REIS MARCOS V G ET AL: "Evaluation of active anti-islanding methods based on the ABNT NBR IEC 62116 and IEEE STD 929-2000 standards", 2015 IEEE 13TH BRAZILIAN POWER ELECTRONICS CONFERENCE AND 1ST SOUTHERN POWER ELECTRONICS CONFERENCE (COBEP/SPEC), IEEE, 29 November 2015 (2015-11-29), pages 1-6, XP032875103, DOI: 10.1109/COBEP.2015.7420161 [retrieved on 2016-02-25] * figures 2, 3; tables I-IV * | 1-15 | |

TECHNICAL FIELDS SEARCHED (IPC)

H02M
H02J
H02H

-/--

The present search report has been drawn up for all claims

| Place of search | Date of completion of the search | Examiner |
|---|---|---|
| The Hague | 30 July 2024 | Madouroglou, E |

EPO FORM 1503 03.82 (P04C01)

Europäisches
Patentamt

European
Patent Office

Office européen
des brevets

# EUROPEAN SEARCH REPORT

Application Number

EP 24 16 6657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 788 619 A (OTT MATTHEW J [US] ET AL) 29 November 1988 (1988-11-29) * column 1, line 40 - column 1, line 62; figure 1 * | 1-15 | |

TECHNICAL FIELDS
SEARCHED        (IPC)

The present search report has been drawn up for all claims

| Place of search | Date of completion of the search | Examiner |
|---|---|---|
| The Hague | 30 July 2024 | Madouroglou, E |

EPO FORM 1503 03.82 (P04C01)

## ANNEX TO THE EUROPEAN SEARCH REPORT
## ON EUROPEAN PATENT APPLICATION NO.

EP 24 16 6657

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2024

| Patent document cited in search report | Publication date | Patent family member(s) | Publication date |
|---|---|---|---|
| US 4788619 A | 29-11-1988 | NONE | |

EPO FORM P0459